(19) Europäisches Patentamt
European Patent Office
Office européen des brevets

(11) EP 1 055 367 A1

# (12) EUROPEAN PATENT APPLICATION

(43) Date of publication:
**29.11.2000 Bulletin 2000/48**

(21) Application number: **00304430.2**

(22) Date of filing: **25.05.2000**

(51) Int Cl.7: **A01N 1/00**, A01N 49/00
// (A01N49/00, 65:00, 43:90, 43:30, 43:16, 37:46, 37:18, 37:10, 31:02)

(84) Designated Contracting States:
**AT BE CH CY DE DK ES FI FR GB GR IE IT LI LU MC NL PT SE**
Designated Extension States:
**AL LT LV MK RO SI**

(30) Priority: **28.05.1999 GB 9912560**

(71) Applicant: **The Bob Martin Company**
**Yatton, Somerset BS49 4BS (GB)**

(72) Inventor: **Spurlock, Mark Shane,**
**The Bob Martin Company**
**Yatton, Somerset BS49 4BS (GB)**

(74) Representative: **Jacob, Reuben Ellis**
**Edward Evans & Co.,**
**Clifford's Inn,**
**Fetter Lane**
**London EC4A 1BX (GB)**

## (54) Ectoparasite control composition

(57) There is provided an ectoparasiticidal composition comprising an insect growth regulator, an insect repellent and a carrier which is preferably formulated as a pour-on or spot-on formulation.

EP 1 055 367 A1

## Description

The invention relates to a composition for controlling ectoparasite infestation of animals, and in particular for controlling flea infestation of domestic animals such as cats.

Ectoparasites, for example fleas, are frequently found on domestic animals, such as cats and dogs. Ectoparasites will feed off their animal host, causing skin irritation and loss of blood. In addition, ectoparasite such as fleas are prolific egg layers under optimum conditions. Flea eggs fall off of the animal host and into its local environment, typically the household of the animal owner. Here they will develop to the adult stage, at which time they seek mammalian hosts, typically resulting in a re-infestation of the original animal host, as well as transient infestation of the animal owner. Hence a cycle of nuisance is generated

Whereas the majority of topically applied insecticidal flea treatments aim to kill the adult fleas on the animal, it is difficult to maintain a 100% kill rate, and hence guarantee breaking the complex life cycle of the flea. A relatively small number of fleas residing on an animal host may lay many eggs, and ultimately re-infestation from the environment occurs. Known compositions exist for the low volume topical application of flea adulticides, commonly known as "spot-on" formulations. Further, combinations employing a pyrethroid and an insect growth regulator as spot-on applications for use with dogs exist. However, these are not suitable for the treatment of some animals particularly cats, due to problems of acute toxicity associated with the use of synthetic pyrethroids as flea adulticides with this species. Insect growth regulator (IGR) and insect development inhibitor (IDI) formulations are available for flea control applications for the cat. These are preparations employing the IGR/IDI as the sole active component of the formulation, and are applied either systemically or topically. Systemic application, such as injection, means that the flea has to bite the animal host to ingest the IGR/IDI, and hence skin irritation may well manifest, particularly under heavy flea challenge. Topical applications of IGR/IDI alone will also not guarantee any immediate relief from flea feeding activity, although, with topical application, flea feeding is not a pre-requisite for the IGR/IDI to act.

It is an object of the present invention to seek to mitigate problems such as these by providing a new ectoparasiticidal composition.

EP 0 518 989 B1 discloses formulations more than 50% and up to 85% by weight of a pyrethroid, and a non-irritant carrier that is an alkyl glycol ether, for the control of ectoparasites on non-human, domesticated animals selected from rats, mites, rabbits, dogs, cattle, poultry, swine and horses.

According to the present invention there is provided an ectoparasiticidal composition comprising an insect growth regulator, an insect repellent and a carrier.

It has been found, surprisingly that an ectoparasiticidal composition according to the invention is particularly efficacious in combating ectoparasite infestation in animals, in particular cats even though it would be expected by the skilled worker that the use of an insect *repellent* in combination with an insect growth regulator would hinder the function of the insect growth regulator in countering the infestation.

It is preferred that the composition is adapted for topical application to a subject, and in particular is adapted for spot-on or pour-on application to the subject.

It is further preferred that the insect growth regulator comprises a compound of the following formula

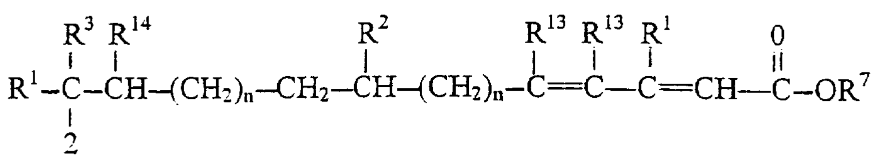

(I)

wherein,

each of m and n is zero or the positive integer one, two or three,

Z is bromo, chloro, fluoro or the group -OR in which R is hydrogen, lower alkyl of one to six carbon atoms or hydrocarbon carboxylic acyl of one to three carbon atoms;

each of $R^1$ and $R^2$ is methyl or ethyl;

$R^3$ is hydrogen, methyl or ethyl;

$R^4$ is lower alkyl of one to six carbon atoms;

each of $R^{12}$, $R^{13}$, and $R^{14}$ is hydrogen or methyl; and

$R^7$ is lower alkyl of one to six carbon atoms, lower alkenyl of two to six carbon atoms, lower alkynyl of three to six carbon atoms, cycloalkyl of three to eight carbon atoms, aryl of six to twelve carbon atoms or aralkyl of seven to twelve carbon atoms.

It is particularly preferred that the insect growth regulator comprises a compound of the following formula,

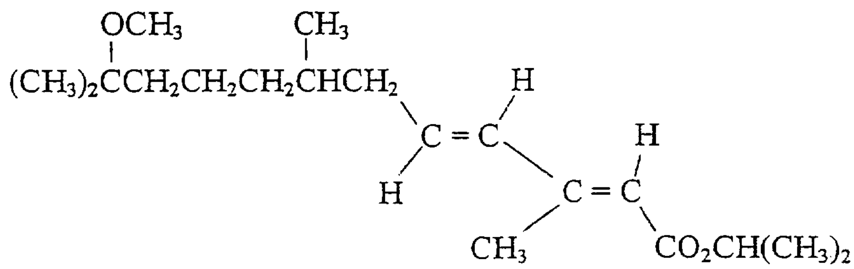

Hereinafter referred to as methoprene, i.e. isopropyl(E,E)-(RS)-11-methoxy-3,7,11-trimethyldodeca-2,4-dienoate. Formulations including this particular insect growth regulator have been found, surprisingly, to be particularly efficaceous and convenient, notwithstanding the fact that methoprene is known to be sensitive to U.V. light.

It is further preferred that the insect repellent comprises 3-(N-butylacetamino)-propionate, which has been found to cause only very limited cosmetic soiling of the subject. Alternatively, the insect repellent may comprise one or more of neem oil extract; citronella oil; diethyl toluamide; dimethylphthalate; N,N-diethyl-3-methylbenzamide; 2-ethyl-1,3-hexandiol; butyl-3,4-dihydro-2,2-dimethyl-4-oxo-2H-pyran-6-carboxylate and/or piperonyl butoxide.

In particular it is preferred that the composition comprises from about 5% to about 20% by weight of the insect growth regulator, and from about 15% to about 70% by weight of the insect repellent.

The carrier may comprise an alkyl glycol ether or an emollient ester.

It is preferred that the carrier comprises one or more of methyldiglycol; cetearyl octanoate, isopropyl myristate; PPG-2 myristyl ether propionate; propylene glycol dicaprylate, dicaprate; caprylic/capric diglyceride; diisopropyl adipate; dioctyl adipate; isocetyl stearate; or lower molecular weight members of the series PPG-x cetyl ethers (where x represents a figure below 30).

It is preferred that the composition includes an antioxidant.

According to a second aspect of the invention there is provided a process for preparing an ectoparasiticidal composition as set out above, which comprises bringing a compound of formula (I) as defined above and an insect repellent into association with at least one carrier therefor.

According to a third aspect of the invention there is provided a method of controlling ectoparasites which comprises the application onto a localised region of the skin of a non-human animal the composition as set out above.

It is preferred that the animal is selected from cats, dogs, rodents, cattle, poultry, horses and swine.

According to a fourth aspect of the invention there is provided the use of an insect growth regulator, an insect repellent and a carrier in the manufacture of a composition for use in controlling ectoparasite infestation on a non-human animal.

The invention will further be described by way of example as set out in the following experiments:

An optimal composition for this invention has the following characteristics: RS-methoprene is formulated with insect repellent IR 3535™ in an alkyl glycol ether carrier, preferably methyldiglycol. In addition, the antioxidant butylated hydroxytoluene (BHT) is added to prevent degradation due to oxidation, thereby enhancing final product shelf life. Potential alternative repellents to IR3535 which might be used in the formulation include neem oil extracts (including azadirachtin), citronella oil, diethyl toluamide, dimethylphthalate. N,N-diethyl-3-methylbenzamide, 2-ethyl-1,3-hexanediol, butyl-3,4-dihydro-2,2-dimethy-4-oxo-2H-pyran-6-carboxylate, and piperonyl butoxide. The optimal formulation detailed has been shown to deliver satisfactory efficacy, is well tolerated and, on an aesthetic basis, causes only transient soiling at the site of application, typically such soiling disappears within 36 hours. Certain other repellents, such as neem extract, have been shown to cause prolonged soiling, apparent as greasy spots, at the site of application, and might be deemed less acceptable to cat owners.

The composition is applied to the animal as a small volume ("spot on") application, with a 1ml volume having been found to be effective on cats weighing up to 6kg. A 1ml volume delivers 133 - 154mg methoprene and 652 - 720mg of IR3535. The composition is applied to the skin surface between the shoulder blades of the cat, the hair coat being swept aside by the cat's owner to facilitate application and minimise coat soiling.
The method for applying the optimal composition, its efficacy and tolerance are illustrated, by the following *in vivo* experiments:

## Experiment 1

### Objective

To investigate the repellency and ovicidal activity of 3 formulations, 2 containing methoprene 15% w/w in a methyldiglycol carrier plus repellent. T0100 contained neem extract 4.5% w/w, T0101 contained IR3535 50% w/w, and T0068 was a blend of IR3535 50% w/w in methyldiglycol, with no methoprene.

### Animals and Methods

20 Adult cats (mixed sex, age and coat length) in the weight range 2.5 - 4kg were randomised into 4 groups of 5, with 3 treatment groups (T0100, T0101 and T0068) plus an untreated control.
For assessing repellency, the cats in the treated groups were given a 1ml dose of the appropriate formulation, applied to the skin surface between the shoulder blades at t=0. For flea challenges, which occurred at t=3h, the cats were placed into individual, flea proof cages and exposed to 50 unfed adult fleas each. One hour later, the number of fleas per cat was assessed, with efficacy calculated according to the formula:

$$\% \text{ Efficacy} = \frac{C-T}{C} \times 100$$

Where C = mean flea counts on cats in the control group, T = mean flea counts on cats in a treated group.
For assessing ovicidal effects of the formulation, 3 groups of 5 cats were used, one untreated control and 2 treated, using T0100 and T0101 respectively.
The cats were treated on day 0, and infested with 50 fleas each on days 3, 11, 18 and 25. On days 6, 14, 21 and 28 a total of 100 eggs were harvested from each cat and incubated at 25°C, 75-80% RH for 4 days. Ovicidal % efficacy calculated using the above formula, where C = mean % larvae alive in control samples, T = mean % larvae alive in treatment sample.

### Results

a) Repellency: the following results (% efficacy, as defined above) were obtained:

| | |
|---|---|
| T0068 | 24% |
| T0100 | 40% |
| T0101 | 34% |

b) Ovicidal Efficacy:

| Days Post Treatment | T0100 Ovicidal Efficacy (%) | T0101 Ovicidal Efficacy (%) |
|---|---|---|
| +8 | 100 | 100 |
| +15 | 100 | 100 |
| +22 | 99.27 | 100 |
| +28 | 94.19 | 100 |

**Experiment 2**

**Objective**

An experimental model was used to simulate a flea-infested home, with matched groups of cats housed in carpeted pens (the carpet having previously been assessed for any inhibitory action towards fleas, and found to be negative in this respect). The pen also contained an upholstered chair, scratching pole, sand, water and food trays. One group was left untreated, one group was treated with a proprietary formulation of the adulticide imidacloprid (80mg in 0.8ml), and the third group was treated with T0104, a formulation containing methoprene 15% w/w, IR3535 70% w/w in a methyldiglycol carrier. The cats were treated at regular, 4-weekly intervals with the test compounds, and the pens were infested periodically with fleas. The objective was to compare the results on flea numbers in the pens obtained from treatment of a leading flea adulticide product and T0104, having infested the pens with fleas over a 12 week period.

**Animals and Methods**

3 groups of 5 adult cats (mixed sex, age, hair coat length) were prepared, with each group having matched characteristics to minimise bias. The cats were housed in pens simulating the domestic environment, allowing 7 days to acclimatise. The cats were treated at days 0, 28 and 56 with the test products, with flea counts and infestation of the pens with fleas as detailed in the following design chart:

| Day | Acclimate Cats | Treat | Flea Counts | Infest Pens With 100 Fleas Each |
|---|---|---|---|---|
| -7 | X | | | |
| 0 | | X | | X |
| 14 | | | | X |
| 28 | | X | X | X |
| 42 | | | | X |
| 56 | | X | X | X |
| 70 | | | | X |
| 84 | | | X | |

Efficacy was calculated according to the following formula:

$$\% \text{ Efficacy} = \frac{C - T}{C} \times 100$$

Where C = mean flea counts on cats in the control group, T = mean flea counts on cats in a treated group.

**Results**

The following table illustrates the mean flea counts in the different trial groups:

| Days Post Treatment | Untreated Control | T0104 | Imidacloprid Solution (0.8ml, 80mg) |
|---|---|---|---|
| +28 | 7.6 | 4.6 | 0 |
| -56 | 14.2 | 3.2 | 0.2 |
| +84 | 12.0 | 1.6 | 0.2 |
| +112 | 12.2 | 4.4 | 0 |

**Comments:** the flea numbers in the untreated control group were well below what had been expected. Close investigation identified that, in this group, an infection of the helminth *Dipylidium caninum* had become established early in the study. Ingestion by the immature stages of the fleas of the oncospheres from this worm (in the environment of the pen) had resulted in larval death, thereby reducing the numbers of adult fleas observed. Neither such infection

nor oncospheres were found in the pens of the treated groups.

## Experiment 3

This study was designed to determine the extent of flea control achieved on cats treated with two spot on formulations, T0104 and T0212, containing 15% RS Methoprene and 3% standardised Neem extract, respectively, in a simulated home environment. Two other groups of cats were treated with proprietary veterinary flea control products, Advantage®, or Program® (sc. injection) for comparative purposes. An untreated control group was used to demonstrate the suitability of the imposed environmental conditions in terms of a natural increase in the size of the flea population, in the absence of any chemical means of control.

## Objective

To determine the efficacy of cat spot-on formulation T0104 (RS Methoprene 15% and Merck IR3535 at 70%), T0212 (standardised Neem extract 3% and Merck IR3535 at 10%) Advantage® and Program® (sc. injection) to control fleas on cats in a simulated home environment. Comparison was with an untreated control group.

## Justification of Test System

The test formulations were used as spot-ons to repel cat fleas and to prevent the further development of eggs produced by fleas feeding on treated cats.

## Study Schedule

| Experimental Dates | |
|---|---|
| Experimental start date | February 2000 |
| Experimental termination date | May 2000 |

## Justification of Schedule

The study ran over a three-month period to allow sufficient time for the development and possible build-up of fleas in the environment.

## Study Design

The study was a randomised, unicentre, open label, untreated (sentinel) controlled efficacy study.

## Ranking and Allocation

The animals were ranked according to randomisation through minimisation with body mass as the criterion (*cf*. SOP ECTO RANK~01). It was attempted to balance groups with regard to hair length. The four treatment groups and the untreated control group consisted of 5 animals each.

## Experimental Design

An experimental model was used to simulate a flea-ridden home in order to assess the comparative efficacies to control fleas of the test and the reference products (Advantage® and Program® sc. injection). Matched groups of cats (n = 5) were housed in five similarly sized pens in the same room. One group was left unprotected to demonstrate that a flea population could become established and replicate under the prevailing conditions. Each pen was initially (Day -7) seeded with 100 pupae and 200 larvae ($L_1$ - $L_3$). One hundred fleas were released into each pen on Days +1, +15, +29, +43 and +57. Each cat was also infested with 50 fleas on Day -7. The study was conducted over a 12-week period and the efficacy of each compound was determined, on a monthly basis, by comparing the number of fleas on each test group, to that of the control group.

Five groups of 5 cats each were used, treated as follows:

| Group | n | Treatment | Dosage |
|---|---|---|---|
| 1 | 5 | No Rx | - |
| 2 | 5 | Program® (so. Injection) | As per label instructions |
| 3 | 5 | (T0104) (IR3535 70%, RS Metoprene 15%) | 0.7 ml/cat |
| 4 | 5 | (T0212) (IR3535 10% Standardised Neem extract 3%) | 0.9 ml/cat |
| 5 | 5 | Advantage® | As per label Instructions |

**Test Animals**

| Description of Test Animals | |
|---|---|
| Number | 25 cats |
| Age Range | Adults |
| Weight | 2.5 - 5kg |
| Breed | Non-specific |
| Coat Length | Mixed (short, medium, long) |
| Sex | Mixed |
| Source | Clin Vet International |
| Identification | Individual Numbers |

The cats were individually identified with an alphanumeric number, weighed on a calibrated scale and their hair lengths and sex recorded (SOP ECTO~08).
The test animals were dewormed with a proprietary niclosamide and levamisole combination (Diworm) every six weeks, with such treatment information recorded in the raw state.

**Source and Transportation of the Cats**

The cats that were used were selected from the colony at ClinVet International, Bloemfontein, South Africa.

**Housing**

Cats were housed in an animal room that contained six similarly sized (2.75 x 1.5m) pens. Such pens are divided by 2.2m high solid brick walls but share the same air space. The floor of each pen was covered by a carpet which had previously been tested to ensure that it has no inhibitory effect on flea development. Each pen also contained an upholstered chair, scratching pole, sand, water and food trays. In order to minimise the risk of fleas, or chemical, being transferred between groups, separate boots, overalls and cleaning utensils were used for each pen. Room temperature was maintained at 24(±2)°C and a RH of 45 ± 10%. Equal quantities of larval feeding medium were spread initially (Day -7) on each of the carpets to facilitate larval development.

**Feeding and Management**

The cats were fed commercially available Royal Canin cat pellets *ad libitum.* Water was available *ad libitum*. The sand trays were cleaned daily.

**Animal Body Mass**

A UWE electronic bench scale, certified for calibration and which was verified for accuracy using three standard weights, was used for weighing individual cats on Day -8.

**Inclusion/exclusion criteria**

Only healthy animals, as determined on Day - 10, were included in the study.

## Parasites

### Fleas

A laboratory bred, South African strain of *Ctenocephalides felis* was used in the study.

## Treatment

### Description and Labelling of Test Product

Drug supplies were labelled with the following information:

| Test Products | | | |
|---|---|---|---|
| Formulation | T0104 | | |
| Batch No. | 9K13 | | |
| Active ingr. | RS Methoprene : | Concentration | 15% |
| | IR3535 : | Concentration | 70% |
| | BHT : | Concentration | 0.05% |
| Vehicle | Methyldiglycol | | |
| Application | Spot-on | | |
| Date of expiry | October 2000 | | |
| Dose Rate | 0.7 ml per cat | | |
| Formulation | T0212 | | |
| Batch No. | T0212-1 | | |
| Active ingr. | Merck IR3535 : | Concentration | 10% |
| | Standardised Neem Extract: | Concentration | 3% |
| | BHT : | Concentration | 0.05% |
| Vehicle | Methyldiglycol | | |
| Application | Spot-on | | |
| Date of expiry | 12 January 2001 | | |
| Dose Rate | 0.9 ml/cat | | |

| Reference Products | | | |
|---|---|---|---|
| Commercial name | **Advantage Spot-on** | | |
| Active ingr. | Imidacloprid : | Concentration : | 10% |
| Application | Spot-on | | |
| Dose Rate | According to label | | |

| | |
|---|---|
| Commercial name | **Program 40 Injectable for Cats** |
| Active ingr. | Lufenuron 40.0mg |
| Application | Injectable suspension |
| Dose Rate | According to label |

## Control Group

The animals in the untreated control group (Group 1) were not treated with a placebo.

**Treatment Group**

Cats in Group 2 (Program®) were only treated once (on Day 0) by a subcutaneous injection at a dose rate as specified in the label instructions. The cats in Group 3 (Methoprene and IR3535) were treated at 0.7 ml/cat and Group 4 (Neem extract and IR3535) at 0.9 ml/cat. Both Groups 3 and 4 were re-treated every four weeks. Cats in Group 5 (Advantage®) were also treated every four weeks as per product label instructions. Treatment was as according to Bob Martin SOP ECTO TREAT~03.

**Protective Clothing**

Disposable gloves and aprons were worn during the treatment procedure.

**Drug Accountability**

The test products and containers were weighed before and after treatment for drug accountability purposes.
Accurate records of receipt, use and return of the test product were retained at the test centre. Drug data were recorded on a Drug Accountability form.

**Assessment of Efficacy**

**Flea Counts**

Fleas were counted on cats according to methods set out in Bob Martin SOP ECTO COUNT~4. For the duration of the study the sequence of combing was: Control group (Group 1), group treated with Program (Group 2), group treated with T0104 (Group 3), group treated with T0212 (Group 4) and lastly, group treated with Advantage® (Group 5). Separate sets of combs, washing equipment, table covers, overalls and aprons were used between groups. The table was also wiped with a wet cloth, aprons were wiped off with a cloth and soapy water and hands were washed with soap and water. Fleas were replaced on cats after counting. Flea counts were recorded on a flea count capture form.

**Efficacy**

The data obtained through the flea counts was used to evaluate the efficacy of the test products. Efficacy was calculated according to the formula:

$$\% \text{ Efficacy} = \frac{C-T}{C} \times \frac{100}{1}$$

Where

C = mean flea counts on cats in the control group, and
T = mean flea counts on cats in a treated group.

Efficacy was assessed on Days +28; +54 and +84.
In order to determine differences between mean flea counts on the different study groups an ANOVA with a treatment effect was done on each of the three assessment days.
Comparisons between each pair of treatment groups were conducted. A significance level of $p \leq 0{,}05$ was accepted.

**Operational Matters**

A daily log of events was maintained throughout the study period.

| **Activity Schedule** | |
|---|---|
| **Day** | **Activity** |
| Day -10 | Clinical examination; comb cats to remove any resident fleas and acclimate. |

(continued)

| Activity Schedule | |
|---|---|
| **Day** | **Activity** |
| Day -8 | Weigh all cats, rank and divide into five groups. |
| Day -7 | Place cats in pens; Infest with 100 fleas each; Seed carpets in pens with 100 pupae, 200 larvae and 400 eggs. |
| Day 0 | Treat Cats. |
| Day +1 | Release 100 fleas into each pen. |
| Day +15 | Release 100 fleas into each pen. |
| Day +28 | Count fleas; Treat (Groups 3, 4 and 5). |
| Day +29 | Release 100 fleas into each pen. |
| Day +43 | Release 100 fleas into each pen. |
| Day +56 | Count fleas; Treat (Group 3, 4 and 5). |
| Day +57 | Release 100 fleas into each pen. |
| Day +84 | Flea counts; Terminate study. |

## Results

The mean flea counts for the control and treated groups are summarised in Table 3.1. For the control group mean flea counts increased from 43 on Day +28 to 96 on Day +84. For the group treated with Program®, mean flea counts varied between 3 (Day +28) and 6 (Day +54). Mean flea counts on the cats treated with formulation T0104 were consistently low ranging from 1.0 (Day +84) to 1.4 (Day +28). In the group treated with formulation T0212 mean flea counts increased from 7.2 (Day +28) to 13.3 (Day +84). No fleas were found on the cats treated with Advantage® on any of the assessment days.

Differences between each of the four treatment groups and the control group were statistically significant on all the assessment days. The differences between the four treatment groups were non-significant.

The efficacy of Program® to suppress the increase of the flea population on the cats was 92% and above, for formulation T0104 it was 97% and above, for formulation T0212 it was 83% and above and for Advantage® it was 100% (Table 3.2).

## Conclusions

It is evident from the results that no recruitment of new adult fleas from the environment occurred in the pens harbouring the Program® and T0104 treated cats. The consistently lower counts on the cats treated with T0104, compared to the Program treated group, can be attributed to the effect of the repellent. In the case of formulation T0212 it is evident that recruitment of new adult fleas from the environment took place, but at a significantly lower rate compared to the untreated control group. Advantage® displayed a persistently high flea adulticidal activity and no fleas were recovered from any of the cats.

Table 3.1.

| Mean flea counts for the different study Groups. | | | | | |
|---|---|---|---|---|---|
| **Day** | **Control** | **Program®** | **T0104** | **T0212** | **Advantage®** |
| +28 | 43.0 | 3 | 1.4 | 7.2 | 0 |
| +54 | 75.6 | 6 | 1.2 | 12.4 | 0 |
| +84 | 96.0 | 4.2 | 1.0 | 13.3 | 0 |

Table 3.2.

| Efficacy of control (%) for the different test substances. | | | | |
|---|---|---|---|---|
| **Day** | **Program®** | **T0104** | **T0212** | **Advantage®** |
| +28 | 93 | 97 | 83 | 100 |
| +54 | 92 | 98 | 84 | 100 |
| +84 | 96 | 99 | 86 | 100 |

**Experiment 4**

**Objective**

To confirm that increasing the concentration of IR3535 in the formulation to 70% w/w (as used in T0104) resulted in an enhancement of flea repellency.

**Animals and Methods**

3 Matched groups of 5 cats (mixed sex, age and coat length) were assembled, one group acting as an untreated control, the other two being treated with the formulation T0104, containing IR3535 70% w/w, methoprene 15% w/w in methyldiglycol as a carrier. The cats in the treatment groups were treated on day 0 at t = -4h (with 1ml of the formulation applied to the skin between the shoulder blades) and then placed into carpeted pens at t = 0. The pens had previously been seeded (t =-2h) with 100 fleas each. At 24h after the cats had been placed in the pens, the cats were removed and comb-counted for fleas. Efficacy of the treatment at t = 24h was calculated using the following formula:

$$\% \text{ Efficacy} = \frac{C - T}{C} \times 100$$

Where C = mean flea counts on cats in the control group, T = mean flea counts on cats in a treated group.

**Results**

Treatment group 1 gave a repellency value of 43.94, group two 37.84 at the 24 hour time point, i.e. a mean flea repellency of 40.89%. Given that repellency relies principally on the repellent acting in the vapour phase surrounding the object treated, the mean value observed at 24 hours after the formulation was applied to the skin is higher than would normally be expected, and suggests that the optimum formulation, to maximise early repellency effect, should include above 50% of the IR3535 repellent.

**Claims**

1. An ectoparasiticidal composition comprising an insect growth regulator, an insect repellent and a carrier.

2. A composition according to claim 1, adapted for topical application to a subject.

3. A composition according to claim 2, adapted for spot-on or pour-on application to a subject.

4. A composition according to any preceding claim, wherein the insect growth regulator comprises a compound of the following formula:

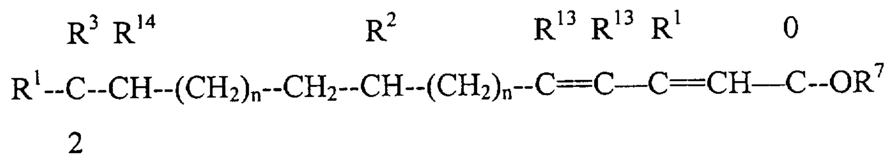

(I)

wherein,

each of m and n is zero or the positive integer one, two or three;

Z is bromo, chloro, fluoro or the group -OR in which R is hydrogen, lower alkyl of one to six carbon atoms or hydrocarbon carboxylic acyl of one to three carbon atoms;

each of $R^1$ and $R^2$ is methyl or ethyl;

$R^3$ is hydrogen, methyl or ethyl;

$R^4$ is lower alkyl of one to six carbon atoms;

each of $R^{12}$, $R^{13}$, and $R^{14}$ is hydrogen or methyl; and

$R^7$ is lower alkyl of one to six carbon atoms, lower alkenyl of two to six carbon atoms, lower alkynyl of three to six carbon atoms, cycloalkyl of three to eight carbon atoms, aryl of six to twelve carbon atoms or aralkyl of seven to twelve carbon atoms.

**5.** A composition according to any preceding claim, wherein the insect growth regulator comprises methoprene.

**6.** A composition according to any preceding claim, wherein the insect repellent comprises 3-(N-butylacetamino)-propionate.

**7.** A composition according to any preceding claim, wherein the insect repellent comprises one or more of, neem oil extract; citronella oil; diethyl toluamide; dimethylphthalate; N,N-diethyl-3-methylbenzamide; 2-ethyl-1,3-hexandiol; butyl-3,4-dihydro-2,2-dimethyl-4-oxo-2H-pyran-6-carboxylate; piperonyl butoxide.

**8.** A composition according to any of claims 4 to 7, comprising from about 5% to about 20% by weight of the insect growth regulator, and from about 15% to about 70% by weight of the insect repellent.

**9.** A composition according to any preceding claim, wherein the carrier comprises an alkyl glycol ether or an emollient ester.

**10.** A composition according to any preceding claim, wherein the carrier comprises one or more of, methyldiglycol; cetearyl octanoate; isopropyl myristate; PPG-2 myristyl ether propionate; propylene glycol dicaprylate/dicaprate; caprylic/capric diglyceride; diisopropyl adipate; dioctyl adipate; isocetyl stearate; or lower molecular weight members of the series PPG-x cetyl ethers (where x represents a figure below 30).

**11.** A composition according to any preceding claim, including an antioxidant.

**12.** A process for preparing an ectoparasiticidal composition according to any one of claims 1 to 10, which comprises bringing a compound of formula (I) as defined in claim 1 and an insect repellent into association with at least one carrier therefor.

**13.** A method of controlling ectoparasites which comprises the application onto a localised region of the skin of a non-human animal a composition according to any ofclaims 1 to 10.

**14.** A method according to claim 12, wherein the animal is selected from cats, dogs, rodents, cattle, poultry, horses and swine.

**15.** The use of an insect growth regulator, an insert repellent and a carrier in the manufacture of a composition for use in controlling ectoparasite infestation on a non-human animal.

European Patent Office

# EUROPEAN SEARCH REPORT

Application Number
EP 00 30 4430

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DATABASE CHEMABS 'Online!<br>CHEMICAL ABSTRACTS SERVICE, COLUMBUS, OHIO, US;<br>retrieved from STN-INTERNATIONAL, accession no. 130:77488 CA<br>XP002148078<br>* abstract *<br>& JP 10 338608 A (SUMITOMO CHEMICAL)<br>22 December 1998 (1998-12-22) | 1-3,8,<br>13-15 | A01N1/00<br>A01N49/00<br>//(A01N49/00,<br>65:00,43:90,<br>43:30,43:16,<br>37:46,37:18,<br>37:10,31:02) |
| Y | | 1,4-7,<br>9-12 | |
| Y | EP 0 894 435 A (GANDHOUR LAB)<br>3 February 1999 (1999-02-03)<br>* page 2, line 18 - line 25 *<br>* page 2, line 34 - line 37 * | 1,4,5,7 | |
| Y | DE 22 46 433 A (BEIERSDORF AG)<br>11 April 1974 (1974-04-11)<br>* page 1, paragraph 1 *<br>* page 2, paragraph 4 *<br>* page 3, paragraph 2 - page 4, paragraph 1 * | 1,6 | TECHNICAL FIELDS SEARCHED (Int.Cl.7)<br>A01N |
| Y | GB 2 317 564 A (MERIAL SAS)<br>1 April 1998 (1998-04-01)<br>* page 2, line 14 - line 23 *<br>* page 2, line 28 - line 33 *<br>* page 4, line 8 - line 11 *<br>* page 6, line 1 - line 26 *<br>* page 10, line 26 - page 13, line 16 * | 1,5,9-11 | |

-/--

The present search report has been drawn up for all claims

| Place of search | Date of completion of the search | Examiner |
|---|---|---|
| THE HAGUE | 21 September 2000 | Lamers, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

# EUROPEAN SEARCH REPORT

Application Number
EP 00 30 4430

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br><br><br><br><br><br>Y | EP 0 516 590 A (SANDOZ AG ;SANDOZ LTD (CH); SANDOZ AG (DE))<br>2 December 1992 (1992-12-02)<br>* page 2, line 1 - line 17 *<br>* page 2, line 54 - page 3, line 34 *<br>* page 4, line 29 - line 30 *<br>--- | 1-5<br><br><br><br><br><br>9-12 | |
| X | US 5 612 047 A (DUFFY ERIC P ET AL)<br>18 March 1997 (1997-03-18)<br>* column 5; example 1 *<br>--- | 1,4,5,7 | |
| X | DATABASE CHEMABS 'Online!<br>CHEMICAL ABSTRACTS SERVICE, COLUMBUS, OHIO, US;<br>M.H. TAG EL-DIN ET AL.: "Synergistic effect of piperonyl butoxide on some zoocides and onsect growth regulators during postembryonic development and adult life of flies (Neobellieria bullata, Musca domestica)"<br>retrieved from STN-INTERNATIONAL, accession no. 123:49771 CA<br>XP002148079<br>* abstract *<br>& ACTA PHYTOPATHOL. ENTOMOL. HUNG., vol. 29, no. 1-2, 1994, pages 165-171,<br>--- | 1,4,5,7 | TECHNICAL FIELDS SEARCHED (Int.Cl.7) |
| A | DATABASE WPI<br>Section Ch, Week 199203<br>Derwent Publications Ltd., London, GB;<br>Class C03, AN 1992-020198<br>XP002148081<br>& JP 03 268901 A (SANYO KOKUSAKU PULP CO), 29 November 1991 (1991-11-29)<br>* abstract *<br>---<br>-/-- | 1-15 | |

The present search report has been drawn up for all claims

| Place of search | Date of completion of the search | Examiner |
|---|---|---|
| THE HAGUE | 21 September 2000 | Lamers, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

# EUROPEAN SEARCH REPORT

Application Number
EP 00 30 4430

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | DATABASE CROPU 'Online!<br>Z.A.MEHR ET AL.: "Evaluation of Commercial and Experimental Repellents Against Xenopsylla cheopsis (Siphonaptera: Pulicidae)"<br>retrieved from STN-INTERNATIONAL, accession no. 1985-82044 CROPU<br>XP002148080<br>* abstract *<br>& J.MED.ENTOMOL.,<br>vol. 21, no. 6, 1984, pages 665-669,<br>----- | 1-15 | |
| | | | TECHNICAL FIELDS SEARCHED (Int.Cl.7) |

The present search report has been drawn up for all claims

| Place of search | Date of completion of the search | Examiner |
|---|---|---|
| THE HAGUE | 21 September 2000 | Lamers, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 00 30 4430

This annex lists the patent family members relating to the patent documents cited in the above-mentioned European search report. The members are as contained in the European Patent Office EDP file on
The European Patent Office is in no way liable for these particulars which are merely given for the purpose of information.

21-09-2000

| Patent document cited in search report | Publication date | Patent family member(s) | Publication date |
|---|---|---|---|
| JP 10338608 A | 22-12-1998 | NONE | |
| EP 0894435 A | 03-02-1999 | FR 2766331 A | 29-01-1999 |
| DE 2246433 A | 11-04-1974 | AT 325342 B | 10-10-1975 |
| | | AU 6027573 A | 13-03-1975 |
| | | CA 1027475 A | 07-03-1978 |
| | | CH 581999 A | 30-11-1976 |
| | | FI 55600 B | 31-05-1979 |
| | | JP 929276 C | 17-10-1978 |
| | | JP 49069827 A | 05-07-1974 |
| | | JP 53008773 B | 31-03-1978 |
| | | NL 7312921 A,B, | 25-03-1974 |
| | | SE 391629 B | 28-02-1977 |
| | | US 4127672 A | 28-11-1978 |
| GB 2317564 A | 01-04-1998 | FR 2746594 A | 03-10-1997 |
| | | AU 2512997 A | 22-10-1997 |
| | | BE 1010478 A | 01-09-1998 |
| | | BR 9702150 A | 20-07-1999 |
| | | CA 2221418 A | 09-10-1997 |
| | | CN 1185716 A | 24-06-1998 |
| | | CZ 9703685 A | 12-08-1998 |
| | | DE 19780440 T | 20-05-1998 |
| | | DK 136497 A | 29-01-1998 |
| | | ES 2137889 A | 16-12-1999 |
| | | FI 974351 A | 27-11-1997 |
| | | WO 9736485 A | 09-10-1997 |
| | | FR 2746597 A | 03-10-1997 |
| | | GR 1002898 B | 11-05-1998 |
| | | HU 9900713 A | 28-06-1999 |
| | | IE 970229 A | 08-10-1997 |
| | | IT TO970268 A | 28-09-1998 |
| | | JP 11508276 T | 21-07-1999 |
| | | LU 90176 A | 27-01-1998 |
| | | NL 1005676 C | 30-09-1997 |
| | | NO 975472 A | 29-01-1998 |
| | | PL 323604 A | 14-04-1998 |
| | | SE 9704304 A | 24-11-1997 |
| | | SK 160197 A | 07-10-1998 |
| | | US 6096329 A | 01-08-2000 |
| | | ZA 9702543 A | 25-09-1998 |
| EP 0516590 A | 02-12-1992 | AT 144102 T | 15-11-1996 |
| | | DE 69214518 D | 21-11-1996 |
| | | DE 69214518 T | 20-03-1997 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 00 30 4430

This annex lists the patent family members relating to the patent documents cited in the above-mentioned European search report.
The members are as contained in the European Patent Office EDP file on
The European Patent Office is in no way liable for these particulars which are merely given for the purpose of information.

21-09-2000

| Patent document cited in search report | Publication date | Patent family member(s) | Publication date |
|---|---|---|---|
| EP 0516590 A | | DK 516590 T | 24-03-1997 |
| | | ES 2094894 T | 01-02-1997 |
| | | GR 3022077 T | 31-03-1997 |
| US 5612047 A | 18-03-1997 | NONE | |
| JP 3268901 A | 29-11-1991 | NONE | |

EPO FORM P0459

For more details about this annex : see Official Journal of the European Patent Office, No. 12/82